# EUROPEAN PATENT SPECIFICATION

(11) **EP 1 831 089 B1**
(45) Date of publication and mention of the grant of the patent: **13.08.2008**
(21) Application number: 05797964.3
(22) Date of filing: 21.10.2005
(51) Int. Cl.: B65G 47/31, B65B 35/16, B65B 25/04

(54) **POSITIONING CONVEYOR**
POSITIONIERFÖRDERER
TRANSPORTEUR DE POSITIONNEMENT

(30) Priority: 22.10.2004 EP 04077918
(43) Date of publication of application: 12.09.2007
(73) Proprietor: FPS Food Processing Systems B.V., 2631 RE Nootdorp (NL)
(72) Inventor: PETERS, Robert, NL-2631 HG Nootdorp (NL)
(74) Representative: van Loon, C.J.J.
(86) International application number: PCT/NL2005/000759
(87) International publication number: WO 2006/043816

(56) References cited:
- EP-A- 0 553 933
- EP-A- 0 885 823
- EP-A- 0 894 752
- US-A- 3 212 621
- US-A- 5 915 523

## Description

The present invention relates to an apparatus as described in the preamble of claim 1.

Such an apparatus is known from EP553933. In this publication, it is described how with a so-called V-channel conveyor, products or objects such as fruits can be supplied and transferred in file, that is, one after the other and mutually separate, to a next sorting conveyor. The transport positions of this sorting conveyor are defined between two hourglass-shaped rollers made up of discs. By means of these discs, the products or objects can be rotated, if necessary. The interspaces between the discs are occupied by the pins of weighing forks which are passed over load cells and can be tilted at a desired discharge station.

Such a combination is highly suitable for substantially spherical products or objects. Because of their substantially symmetrical shape, at transfer from the V-channel conveyor to such a sorting conveyor, rolling will proceed in a fluent manner. For somewhat elongated objects, such as gherkins or small boxes, it has been found that such a transfer often leads to congestion.

To remedy such inadequacy, the apparatus according to the invention is characterized in that the apparatus further comprises an endless positioning conveyor, immediately following the feed conveyor, at the end of which feed conveyor a detector is provided, as well as a control, which controls the speeds of the feed conveyor and of the positioning conveyor, and hence the transfer of the objects onto the positioning conveyor, the control is arranged such that the positioning conveyor can be slowed or accelerated depending on the supply of products from the feed conveyor in order to transfer the objects with intermediate distances onto said positioning conveyor, wherein the intermediate distances of the transferred objects on the positioning conveyor correspond to values previously entered in the control, and wherein the objects are taken over from the positioning conveyor by the sorting conveyor using grippers.

With such an apparatus, to great advantage, elongated objects or products, such as cucumbers, gherkins, or chicory, or also other box-shaped objects, can be taken up, transported, and sorted without their being damaged.

A sorting conveyor with gripper is known from EP607508. Products are taken over by the grippers from a so-called roller conveyor and generally involve substantially spherical and rotatable products such as apples and citrus fruits. Addressed in particular are the dimensioning and design of the grippers, allowing the delicate products to be taken over without their being damaged, as well as the possibility of weighing with the gripper system.

According to a further exemplary embodiment of the present invention, the apparatus is characterized in that at take-over by the grippers, the speeds of the positioning conveyor and of the sorting conveyor are substantially equal.

In this way, it will be possible for the objects to be taken over without sliding or abrasive movements. Furthermore, take-over will take place reliably, that is to say that, during the present engagement at relative speed v = 0 m/s, also to be regarded as a situation of 'standstill', turning away or falling is advantageously prevented.

It is noted that in US-A-5,915,523 discloses a unit for transferring product to a conveying device. Each product is fed at a transfer station into a respective supply pocket on a conveyor belt, which pocket is longer than the product and has a stop portion. The product is moved inside the pocket against the stop portion in order to feed each product in time to the conveying device.

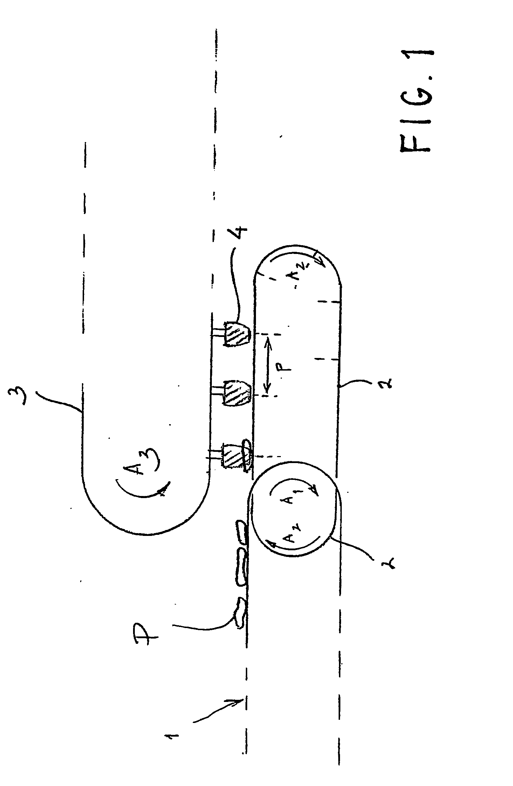

The invention will be described in more detail hereinafter with reference to Fig. 1, in which the apparatus is represented schematically.

In Fig. 1, somewhat elongated objects or products P are supplied on an endless feed conveyor 1. Its direction of movement is indicated with an arrow Al. This feed conveyor is preferably a so-called V-channel conveyor with two endless, flat strips forming a V-channel. With such a V-channel, the products or objects which, when being supplied to this V-channel, are disposed not only behind each other but also on top of each other, are singulated, that is, brought into file, one behind the other. The strips may also move at different speeds, thereby causing the products or objects, through friction with the strips, to rotate to some extent as well. The situation of products P in file at the end of the feed conveyor 1 is schematically represented. The drive of, for instance, an end wheel is not represented.

Following the feed conveyor 1 is an endless positioning conveyor 2 having a direction of movement indicated by arrow A2, likewise schematically represented without drive of, for instance, an end wheel. As shown, the transport paths can merge, for instance through overlap. Conveyor 2 may be flat, or also possess some relief in the form of, for instance, slight curves, forming channels in alignment with the V-channels of conveyor 1. In order to position the products P at pre-set and known intermediate distances p, the control of the drive is arranged such that conveyor 2 can be slowed or accelerated depending on the supply of products P from conveyor 1.

From the positioning conveyor 2, the products P are taken over by grippers 4 of an endless sorting conveyor 3. This conveyor 3 is set at a sorting speed v0 and the grippers of this conveyor 3 have an intermediate distance or pitch distance p. In general, this conveyor 3 is disposed above conveyor 2, but a different set-up, adjacent or lateral, is conceivable, depending on the type of gripper. In particular the sorting speed v0 will determine the settings of the movements of the upstream conveyors 1 and 2.

Accordingly, the control of especially conveyor 2 will be prompted by detectors, for instance photocells, at the end of conveyor 1, as well as by the earlier-mentioned speed v0. Further, the control will preferably be arranged such that the speeds of both conveyor 2 and conveyor 3 are equal to v0, also that the products P are at pitch p, and also that the products P are disposed on conveyor 2, such as to allow 'zipping', that is, at take-over the products will be taken over by their middle by the grippers 4.

It will be clear to anyone skilled in the art that small modifications in the above-described embodiment of the invention are possible without departure from the scope of protection of the claim. For instance, for conveyor 2, different lengths can be chosen, although advantageously a conveyor having a length of some ten pitch distances p will suffice. A design according to the embodiments described renders complicated transfers superfluous and can thus be implemented inexpensively.

## Claims

1. An apparatus for taking over singulated objects, in particular at least slightly elongated objects,
wherein the objects are supplied on an endless feed conveyor which is formed by two endless conveyor strips forming a V-channel, and
wherein the objects are subsequently transferred to a following endless sorting conveyor with transport positions at fixed mutual intermediate distances or pitch distances,
**characterized in that**
the apparatus further comprises an endless positioning conveyor, immediately following the feed conveyor, at the end of which feed conveyor a detector is provided, as well as a control, which controls the speeds of said feed conveyor and of the positioning conveyor, and hence the transfer of the objects onto the positioning conveyor, wherein the control is arranged such that the positioning conveyor can be slowed or accelerated depending on the supply of products from the feed conveyor in order to transfer the objects with intermediate distances onto said positioning conveyor,
wherein said intermediate distances of the transferred objects on the positioning conveyor correspond to values previously entered in the control, and
wherein the objects are taken over from the positioning conveyor by the sorting conveyor by means of grippers.

2. An apparatus according to claim 1, **characterized in that**
at take-over by the grippers, the speeds of the positioning conveyor and of the sorting conveyor are substantially equal.

## Patentansprüche

1. Einrichtung zur Übernahme vereinzelter Objekte, insbesondere zumindest leicht länglicher Objekte,
bei der die Objekte auf einem endlosen Zufuhrförderer herangefördert werden, der durch zwei endlose, einen V-förmigen Kanal bildende Förderstreifen gebildet ist,
und bei dem die Objekte dann auf einen anschließenden endlosen Sortierförderer überführt werden, der Transportpositionen in festen Zwischenräumen oder Teilungsabständen aufweist,
**dadurch gekennzeichnet, dass**
die Einrichtung ferner einen endlosen Positionierförderer aufweist, der unmittelbar auf den Zufuhrförderer folgt, an dessen Ende ein Detektor und eine Steuerung vorgesehen sind, die die Geschwindigkeiten des Zufuhrförderers und des Positionierförderers und damit die Überführung der Objekte auf den Positionierförderer steuern, wobei die Steuerung derart ausgebildet ist, dass der Positionierförderer je nach der Zufuhr der Objekte von dem Zufuhrförderer verlangsamt oder beschleunigt werden kann, um die Objekte mit gegenseitigen Abständen auf den Positionierförderer zu überführen,
wobei die gegenseitigen Abstände der auf den Positionierförderer überfährten Objekte zuvor in die Steuerung eingegebenen Werten entspricht,
und wobei die Objekte von dem Positionierförderer durch den Sortierförderer mit Hilfe von Greifern übernommen werden.

2. Einrichtung nach Anspruch 1, **dadurch gekennzeichnet, dass** bei der Übernahme durch die Greifer die Geschwindigkeiten des Positionierförderers und des Sortierförderers im Wesentlichen gleich sind.

## Revendications

1. Appareil pour prélever des objets individuels, en particulier des objets au moins légèrement allongés,
dans lequel les objets sont fournis par un transporteur d'alimentation sans fin qui est formé par deux bandes de transport sans fin formant un canal en V, et dans lequel les objets sont transférés par la suite vers un transporteur de tri sans fin suivant avec des positions de transport à des distances de pas ou des distances intermédiaires mutuelles fixes,
**caractérisé en ce que** l'appareil comprend de plus un transporteur de positionnement sans fin, suivant immédiatement le transporteur d'alimentation, à l'extrémité duquel transporteur d'alimentation est prévu un détecteur, ainsi qu'une commande, laquelle commande les vitesses dudit transporteur d'alimentation et dudit transporteur de positionnement, et de là le transfert des objets sur le transporteur de positionnement, dans lequel la commande est agencée de telle sorte que le transporteur de positionnement puisse être ralenti ou accéléré selon la fourniture des produits provenant du transporteur d'alimentation de façon à transférer les objets avec des distances intermédiaires sur ledit transporteur de positionnement,
dans lequel lesdites distances intermédiaires des objets transférés sur le transporteur de positionnement correspondent à des valeurs préalablement entrées dans la commande, et dans lequel les objets sont prélevés du transporteur de positionnement par le transporteur de tri par l'intermédiaire d'éléments de préhension.

2. Appareil selon la revendication 1,
**caractérisé en ce que**, au niveau du prélèvement par les éléments de préhension, les vitesses du transporteur de positionnement et du transporteur de tri sont sensiblement égales.
